# EUROPEAN PATENT APPLICATION

(11) **EP 2 674 629 A2**
(43) Date of publication of application: **18.12.2013**
(21) Application number: 13171278.8
(22) Date of filing: 10.06.2013
(51) Int. Cl.: F16B 7/14

(54) **Lock device for telescopic tubing**

(30) Priority: 13.06.2012 GB 201210527
(71) Applicant: Laing, Paul Emmett, Glossop Derbyshire SK13 8UG (GB); Harrison, Paul, Bristol BS16 6DP (GB)
(72) Inventor: Laing, Paul Emmett, Glossop Derbyshire SK13 8UG (GB); Harrison, Paul, Bristol BS16 6DP (GB)
(74) Representative: Stoner, Gerard Patrick

(57) **Abstract**

A lock (8) for telescopic tubing is disclosed, which comprises a screw clamp (14) and a lever operated clamp (20). The lock can be used to fix the length of telescopic tubing, such as telescopic tent poles.

## Description

### FIELD OF THE INVENTION

The invention relates to locks for telescopic tubing. Specifically, it relates to locks for telescopic camping poles.

### BACKGROUND TO THE INVENTION

Telescopic tube arrangements, comprising an inner rod or tube which can slide telescopically in an outer, larger diameter tube, are used in applications such as extendable mops and brooms, camera tripods, garden tools, and in camping poles. For each of these applications, the tubes should be lockable after adjusting to a desirable length so that force can then be applied to one end of the tubing without telescopic displacement.

Clamps for locking inner and outer tubes against such undesired telescopic displacement are known. These typically work through application of a pushing force to the inner tube to wedge it against the outer tube, application of gripping forces to both tubes, or application of a constricting force to the outer tube to deform it into contact with the inner tube.

A known such clamp uses a thumb screw directed at the inner tube to push that inner tube against the outer tube. The screw is tightened to apply force to the inner tube so as to effect the locking operation, with a greater force applied by a tighter screw. However, tightening the screw on such a clamp is difficult whilst holding the inner and outer tubes in their selected position.

A newer known clamp has a camming lever pivotable into camming engagement with the inner tube. Such a lever can be easily operated whilst holding the inner and outer tubes in their selected position.

### STATEMENT OF THE INVENTION

The invention provides a lock device for telescopic tubing, comprising
(i) an elongate tubular body having an axial bore extending throughout its length with a first open end for receiving an end of an outer tube and an opposite second open end for receiving an end of an inner tube,
(ii) a lever operated clamp mounted on the tubular body which includes a lever which can be moved from an unlocked position to a locked position to apply a force to one of the tubes located in the bore in the tubular body, and
(iii) a screw operated clamp mounted on the tubular body, the clamp including a screw which can be threadingly advanced through the wall of the tubular body to apply a force to one of the tube located in the bore in the tubular body.

In use, the lever operated clamp can be engaged quickly and easily whilst the tubes are held in their desired position. Movement of the lever into the locked position readily provides a reproducible clamping force and displacement.

After the lever operated clamp has been engaged, the screw operated clamp can be engaged easily, without having to hold the tubes in their relative positions while turning the screw. The screw clamp provides an adjustable force and displacement to suit requirements. Through sufficient tightening of the screw, a greater clamping force can be applied than that applied by the lever operated clamp.

The inventors have found that for some applications, the reproducible clamping force and displacement afforded by a lever operated clamp is insufficient to prevent telescopic displacement. Such applications include, for example, telescopic tent poles which can be used in high wind. Further, it is often desirable for telescopic tubing to be made from thin, lightweight materials, but these can be deformed through repeated clamping. The displacement of the lever operated clamp cannot be adjusted to compensate for such distortion. The clamping force from the screw operated clamp can be adjusted such that it is greater than lever operated clamping force. The clamping force exerted by the screw operated clamp can be adjusted to compensate for distortion of the tubing.

In use, it is preferred that the action of each of the clamps should exert a force on the inner tube, pushing the inner tube into frictional engagement with the outer tube, preventing telescopic displacement.

The lever and screw head are preferably arranged in a straight line along the outside of the tubular body parallel to the axis of the bore. This minimises the chance of them interfering with other parts of the devices to which they are attached, such as tent canvas, if attached to a tent pole.

The lever operated clamp may comprise a camming lever and a clamping plate, wherein the camming lever can be pivoted into camming engagement with the clamping plate, the clamping plate being urged transversely relative to the axis of the tube. That is, the camming lever can be pivoted to urge the clamping plate into clamping engagement with the telescopic tubing in use. The clamping plate can be moved between a retracted position in which it does not protrude into the axial bore of the tubular body, and an engagement position in which it does protrude into the axial bore of the tubular body. The clamping plate may be biased towards its retracted position. The clamping plate may be a portion of the tubular body which can be depressed. Where a clamping plate is present, it may have a concave tube engagement surface, the curvature of which matches that of the telescopic tubing.

Alternatively, the lever operated clamp may comprise a camming lever, which can be pivoted into direct camming engagement with the inner tube in use. The camming lever then has a camming engagement surface, which may be concave, the curvature of this concave camming engagement surface substantially matching that of the telescopic tubing.

The lever is preferably attached to a pivot member.

Such constructions based around a camming lever are relatively cheap to manufacture, reliable in use and easy to operate.

A transverse bore may be provided in the tubular body perpendicular to the longitudinal axis of the tubular body, the transverse bore extending between the inside of the axial bore and the outside of the tubular body and receiving the screw of the screw operated clamp.

Alternatively, the transverse bore may be entirely outside the axial bore, and the screw then acts to reduce the diameter of the tube in the tubular body, thereby applying a constricting or gripping force to the telescopic tubing.

The screw operated clamp may comprise a thumb-screw for ease of use.

The diameter of the axial bore in the tubular body is slightly larger than the diameter of the outer tube, such that the lock device fits tightly over an end of the outer tube. The lock device may be seated in its operative position by a shoulder on the outer tube. Alternatively, the lock device may further comprise a seating member to seat the lock device in its operative position. Either arrangement allows the lock to be retro-fitted to existing telescopic tubing.

The lock device is preferably for use with telescopic camping poles, particularly those used in caravan awnings. The bore of the tubular body may be cylindrical, with a diameter between about 22 mm and 26 mm, to allow the lock to be retro-fitted to existing standard sized telescopic camping poles.

The invention also provides telescopic tubing apparatus comprising a lock device as described above, and a kit of parts comprising (a) a lock device as described above, (b) an outer tube, and (c) an inner tube, the outer and inner tubes being suitable for engagement in a telescopic manner.

The skilled person will appreciate that the tubular body of the lock device can have portions cut out of it. The skilled person will also appreciate that the device could be used with other telescopic arrangements, which, by way of example, may comprise an inner rod and outer tube.

### DETAILED DESCRIPTION OF AN EMBODIMENT

The invention is now illustrated by description of examples, with reference to the accompanying drawings.
Figure 1 shows a perspective view of a locking device embodying the invention.
Figure 2 shows an end view of the device in a release condition (lever and lever assembly not shown).
Figure 3 shows an end view of the device in a locked condition (lever and lever assembly not shown).

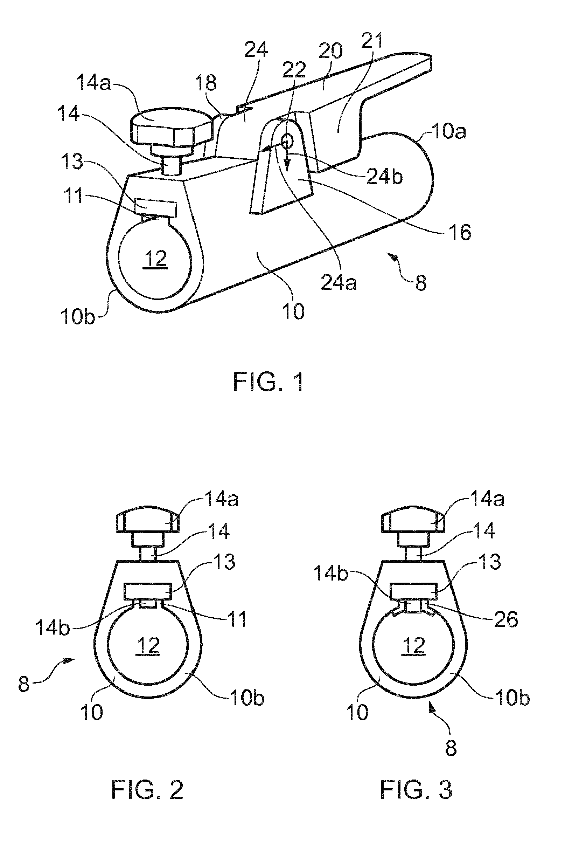

The lock device 8 shown in Figure 1 has a tubular body 10.

The tubular body defines a longitudinal axis. An elongate axial bore 12 is provided through the body 10. The bore is open at both the first end 10a and the second end 10b, so that it can receive the telescopic tubing in use. The bore 12 is substantially cylindrical. A recess 11 is provided in the wall of the tube.

A radial bore is provided through a wall of the tubular body 10, perpendicular to the axial bore 12. The radial bore extends between the axial bore 12 and the outside of the body 10. A block 13 is provided at the inside end of the radial bore. The radial bore extends through the block. The section of the radial bore in the block has a screw thread on the bore wall. This receives and retains a thumb screw 14. The head of the thumb screw 14a is outside the body 10.

First and second support arms 16,18 are present on the outside of the tubular body. The support arms support a lever 20 between them. A pin 22 extends from the first support arm 16 to the second support arm 18, through the lever 20. The lever 20 can pivot about this pin between a first release position, in which the lever is approximately perpendicular to the axial bore 12, and a second locked position as shown in Figure 1 in which the lever is approximately parallel to the axial bore 12.

The lever 20 and the thumb screw head 14a are arranged in a line along the outside of the tubular body 10 parallel to the axial bore 12. When the lever 20 moves from the release position, it pivots away from the thumb screw 14. The lever 20 is closer to the first end 10a of the tubular body than the thumb screw 14. (The thumb screw 14 is closer to the second end 10b than the lever 20.)

The lever 20 is a camming lever, and has a cam element 24. The cam element has a first portion and a second portion. The radius 24a of the first portion is less than the radius 24b of the second portion. The lever comprises two opposing limbs 21. These abut the body 10 when the lever 20 is in the locked position. The limbs 21 have an inward facing gripping element, which can grip the body 10, and retain the lever in the locked position.

Underneath the cam element 24 in the tubular body 10 is a concave clamping plate 26 which can be displaced when acted on by the cam element. The clamping plate 26 abuts the cam element 24. The concave clamping plate 26 has the same curvature as the bore 12.

In use, the outer tube of a telescopic tubing apparatus (not shown) is inserted into the axial bore 12 at the open first end 10a of the tubular body. The second end 10b of the body of the lock device is seated on a shoulder on the outside of the outer tube. The inner tube of the apparatus is inserted into the bore 12 at the second end 10b of the tubular body and into the outer tube so that the inner and outer tubes are in a telescoping arrangement. The lever 20 is in its first position while the tubes are inserted into the tubular body so that the clamping plate 26 is retracted. The thumb screw 14 is also retracted so that its tip 14b is in the recess 11. The bore 12 is then clear, as shown in Figure 2.

The lever 20 is then pivoted from the first position to the second position. It pushes the clamping plate 26 out of the recess 11 such that it protrudes into the bore 12, as shown in Figure 3. The clamping plate 12 pushes the inner tube to press it against the outer tube.

Thumb screw 14 is then operated so as to engage the inner tube. The tip 14b of the thumb screw moves from recess 11 to protrude into the bore 12 as shown in Figure 3, and engage the inner tube. With sufficient tightening of the thumb screw 14, the force pressing the inner tube against the outer tube is increased.

The lock device 8 is made from a plastic-fibreglass composite. The body 10 is made by injection moulding. Lever 20 is also made by (separate) injection moulding. The support arms 16, 18 are formed integrally with the tubular body 10 in the injection moulding step.

## Claims

1. A lock device for telescopic tubing, comprising
(i) an elongate tubular body having an axial bore extending throughout its length with a first open end for receiving the end of an outer tube and an opposite second open end for receiving the end of an inner tube,
(ii) a lever operated clamp mounted on the tubular body which includes a lever which can be moved from an unlocked position to a locked position to apply a force to one of the tubes located in the bore in the tubular body, and
(iii) a screw operated clamp mounted on the tubular body, the clamp including a screw which can be threadingly advanced through the wall of the tubular body to apply a force to one of the tube located in the bore in the tubular body.

2. A lock device according to claim 1, wherein the lever and screw head are arranged in a straight line along the outside of the tubular body parallel to the axis of the bore.

3. A lock device according to claim 1 or claim 2, wherein the lever operated clamp either
(a) comprises a camming lever and a clamping plate, wherein the camming lever is pivotable into camming engagement with the clamping plate to urge the plate transversely relative to the axis of the axial bore, or
(b) comprises a camming lever, which can be pivoted into direct camming engagement with the inner tube in use.

4. A lock device according to claim 3, wherein the clamp comprises a camming lever and a clamping plate, and wherein the clamping plate has a concave tube engagement surface.

5. A lock device according to any one of the preceding claims, wherein a transverse bore is provided in the tubular body perpendicular to the longitudinal axis of the tubular body, the transverse bore extending between the inside of the axial bore and the outside of the tubular body and receiving the screw of the screw operating clamp.

6. A lock device according to any one of the preceding claims, wherein the screw operated clamp comprises a thumb-screw.

7. A telescopic tubing arrangement comprising a lock device according to any one of claim 1 to 6.

8. A kit of parts comprising (a) a lock device according to any one of claim 1 to 6, (b) an outer tube, and (c) an inner tube, the outer and inner tubes being suitable for engagement in a telescopic manner.
